# EUROPÄISCHE PATENTANMELDUNG

(11) **EP 1 220 074 A1**
(43) Veröffentlichungstag der Anmeldung: **03.07.2002**
(21) Anmeldenummer: 00204829.6
(22) Anmeldetag: 27.12.2000
(51) Int. Cl.: G06F 1/00, H04L 29/06

(54) **System zur Interkommunikation in heterogenen Netzwerken**

(71) Anmelder: Sassen, Roland, 26892 Dörpen (DE)
(72) Erfinder: Sassen, Roland, 26892 Dörpen (DE)

(57) **Zusammenfassung**

"THINCIA-RS" ist ein System, das eine kontrollierte und sichere Korrelation und Kommunikation zwischen Objekt- und Datenbanken und -verwaltungen aller Arten mit minimalem Aufwand gewährleistet. Gleichzeitig macht "THINCIA-RS" eine einfache und eindeutige Authentifizierung und Zugriffsberechtigung des Anwenders möglich und eröffnet dadurch den Applikation-Service-Providern eine einfache Kontenverwaltung der verschiedenen Anwendern.

## Beschreibung

Die stark zunehmendem Verfügbarkeit des Internet's führt dazu, dass teure und spezifische Computer-Software mehr und mehr von sogenannten ASP (Application Service Provider'n) leihweise über das Internet angeboten werden. Das hat zur Folge, dass die Software nicht mehr auf jedem einzelnen Arbeitsplatz installiert und bei jeder neuen Version wieder aufdatiert werden muss. Die Software wird also nur noch zentral auf einem oder mehreren Servern installiert und steht dann den Anwendern nach Bedarf zur Verfügung. Die Vorteile sind evident: Es sind dies die Kosteneinsparungen und das Wegfallen der Konfiguration auf dem einzelnen Arbeitsplatz, die dann keine Rolle mehr spielt.

Bei ASP's wie auch bei Grossunternehmen kommt meistens sogenannte "Thin Client Technology" der Firmen Citrix (Metaframe) und Tarantella Inc. oder traditionelle Unix- oder Mainframe-Systeme zum Einsatz. Dadurch wird die Anzahl von Servern in einem Unternehmen stark vergrössert und auch die Arten der Server variieren und damit wird nicht zuletzt ein unverhältnismässig grosser Administrationsaufwand produziert. (siehe Schema 1)
Da jeder Benutzer auf jedem Server angelegt werden muss, kommt es hier neben dem erhöhten Aufwand auch zu erheblichen Sicherheitslücken, u.a. bedingt durch falsch angelegte oder versehentlich nicht gelöschte Benutzerkonten.

Unsere Erfindung "THINCIA-RS" basiert auf einem System, das diese Probleme auf eine einfache Art eliminiert. Es bildet eine zentrale Verwaltung, welche die Berechtigungen und Zugriffe auf verschiedene Dateisysteme sowie die verschiedenen Benutzerkonten in einer Datenbank aufnimmt. Jeder Benutzer und jedes Objekt wird in einer zentralen, verschlüsselten Anwendung verwaltet. Mit diesem System werden alle Benutzeranmeldungen zentral aufgenommen und an die beteiligten Server weiter geleitet. Damit kann auch die Verantwortung für Teile der Sicherheitsstruktur ohne Gefährdung der Gesamtsicherheit an autorisierte Anwender übertragen werden. So kann z.B. der EDV-Verantwortliche eines Betriebes, der eine Anwendung bei einem ASP gemietet hat, die weiteren Berechtigungen selbst steuern ohne dass der Provider eingreifen muss.

Die Erfindung "THINCIA-RS" benutzt dabei ein standardisiertes Protokoll, das LDAP, das alle gängigen Betriebssysteme gemeinsam haben und das bereits heute zur Koordination der verschiedenen Rechnerplattformen und Betriebssysteme eingesetzt wird.

Die Erfindung besteht darin, dass "THINCIA-RS" die User- und Objektverwaltung von Tarantella Enterprise 3 und Tarantella Enterprise 3 (ASP-Edition) übernimmt und sie an die User- und Objektdatenbank DIRXML, E-PLANET und ähnliche Systeme weitergibt. Dann übernimmt die Erfindung "THINCIA-RS" Import- und Exportfunktion. Dadurch kann die gesamte Anwender- und Objektverwaltung von Tarantella, sowie der an Tarantella angeschlossenen Applikations-Server vom Microsoft, Unix, Linux, MaxOS, IBM AIX, AS400, Sun SPARC Solaris, etc. zu DIRXML, E-PLANET und ähnlichen Systeme übertragen.

Die Erfindung "THINCIA-RS" bewirkt somit, dass DIRXML, E-PLANET und ähnliche Systeme als Metadirectory verwendet werden kann, das die gesamte Anwender- und Objektverwaltung zentral durchführt und überwacht, was bisher nicht möglich war.

Durch die Erfindung von "THINCIA-RS" wird für den Anwender nicht nur der Systemzugang wesentlich erleichtert, sondern es wird ihm ermöglicht sich sicher zu authentifizieren und gleichzeitig Zugriff auf sämtliche Applikations-Server zu haben und dies mit nur einem einzigen Web-Browser mit geringer Bandbreite.

Mit der Erfindung von "THINCIA-RS" wird das gesamte Verrechnungssystem aller Applikation-Service-Providern einheitlich und gleichzeitig erfasst und garantiert dadurch dem einzelnen Anwender nicht nur einen umfassenderen und rascheren Zugriff auf alle Systeme sondern auch die Sicherheit in der Benutzung und die Zuverlässigkeit der Abrechnung.

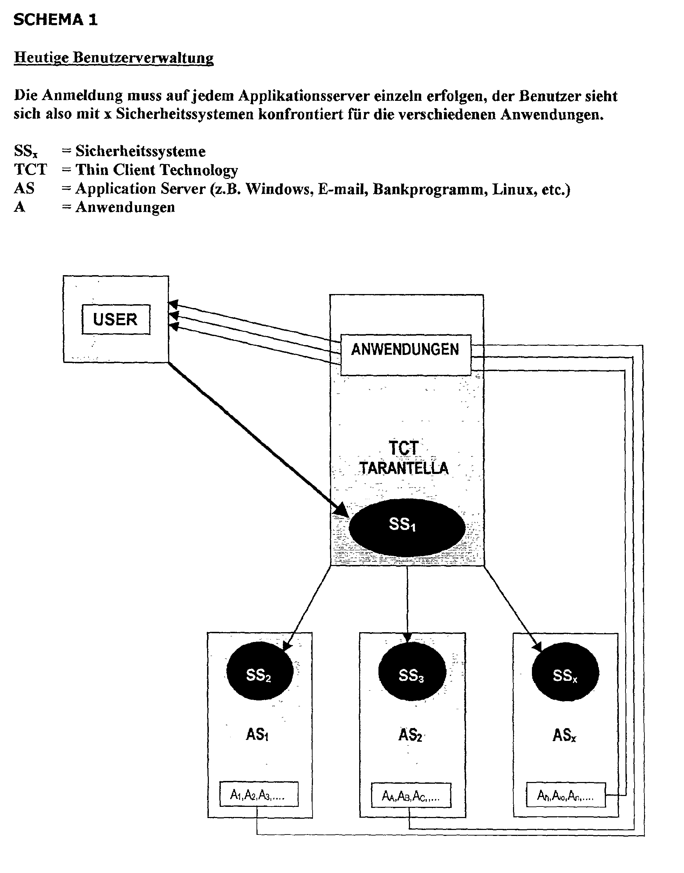

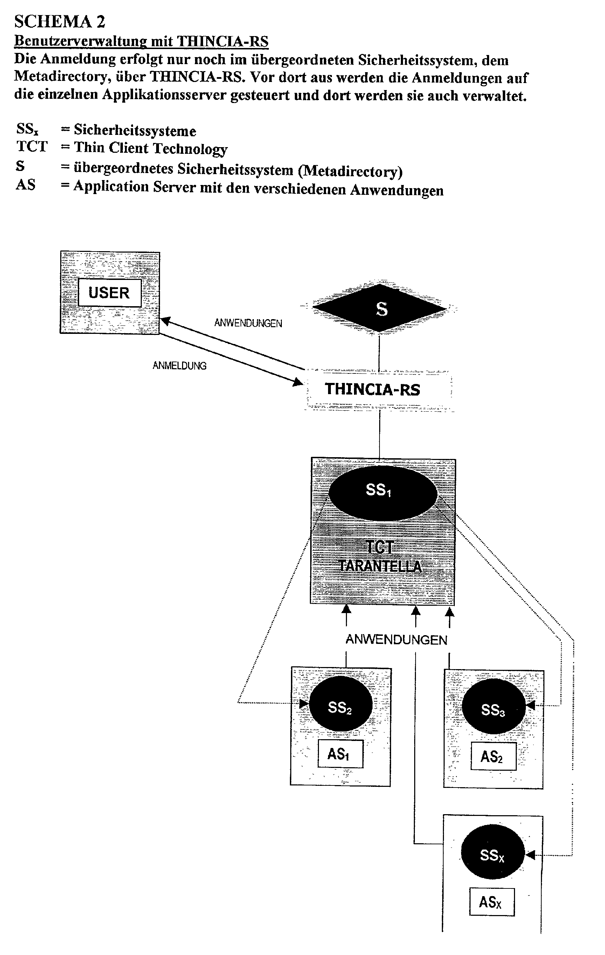

## Patentansprüche

**1.** Ermöglichung einer sicheren Authentifizierung und Autorisierung zum Zugriff auf sämtliche Applikations-Server durch die Verbindung von Tarantella und DIRXML, E-PLANET und ähnlichen Systemen mittels "THINCIA-RS".

**2.** Synchronisation der Verbindung von Tarantella und DIRXML, E-PLANET und ähnlichen Systemen mittels "THINCIA-RS".

**3.** Interkommunikation zwischen der gesamten Objektverwaltung aller Applikations-Server, Tarantella und DIRXML, E-PLANET und ähnlichen Systemen mittels "THINCIA-RS".

**4.** Integration der Objektverwaltung von Tarantella in DIRXML, E-PLANET und ähnliche Systeme mittels "THINCIA-RS".

**5.** Ermöglichung des Anwenders mit nur einer, sicheren, Identifizierung auf sämtliche Applikations-Server, die in DIRXML, E-PLANET und ähnliche Systeme integriert sind mit nur einem Web-Browser mittels "THINCIA-RS".

**6.** Integration des Metadirectory DIRXML, E-PLANET und ähnlichen Systemen in die Tarantella-ASP-Technologie mittels "THINCIA-RS".

**7.** Ermöglichung der biometrischen Authentifizierungs-Verfahren zur Zugriffsermächtigung auf sämtliche Applikations-Server mittels "THINCIA-RS".
